# EUROPEAN PATENT SPECIFICATION

(11) **EP 3 575 654 B1**
(45) Date of publication and mention of the grant of the patent: **21.09.2022**
(21) Application number: 17894407.0
(22) Date of filing: 19.12.2017
(51) Int. Cl.: F16L 1/26, F16L 55/18, F16L 55/168

(54) **EQUIPMENT FOR REPAIRING DUCTS**
AUSRÜSTUNG ZUR REPARATUR VON LEITUNGEN
ÉQUIPEMENT POUR LA RÉPARATION DE CONDUITS

(30) Priority: 30.01.2017 BR 102017001908
(43) Date of publication of application: 04.12.2019
(73) Proprietor: Arbra Engenharia Industrial Ltda (BR/RS), 91501-970 Porto Alegre (BR)
(72) Inventor: PETRY, Gabriel, 90035-051 Porto Alegre (BR); VANZ DE ANDRADE, Leandro, 91410-330 Porto Alegre (BR); ALEJANDRO TARNOWSKI, Gabriel, Obera (AR)
(74) Representative: Sach, Greg Robert
(86) International application number: PCT/BR2017/050391
(87) International publication number: WO 2018/137012

(56) References cited:
- WO-A2-2011/049668
- BR-A- P10 104 774
- BR-A2- PI0 706 196
- BR-U2- MU9 000 565
- BR-U2- MU9 000 565
- CN-B- 103 470 910
- CN-B- 104 191 605
- FR-A1- 2 666 864
- FR-A1- 2 991 747
- JP-A- H08 142 194
- US-A1- 2008 150 277
- US-A1- 2011 079 310

## Description

### FIELD OF INVENTION

The instant invention describes a pipeline repair equipment. More specifically, it comprises equipment which provides lines repairing with external damage through the continuous winding technique (or *winding filament)* with a pretensioned repair material in the line surface to be repaired, generating compressive stresses on the line, said equipment actuated by a local or remote operated hydraulic or electrical supply control unit.

### BACKGROUND OF INVENTION

The Oil and Gas Exploration and the need of maintenance of production assets who approach the end of their operational life imply the need for operational planning for integrity assessment and intervention in the lines.

However, in an increasing inventory of maintenance lines, conventional procedures become infeasible as it implies an enormous time and cost, generating operational outage in the case of overland distribution pipelines or recollection for deck repair of launching vessels or replacement of damaged passages and lines reinstallation.

Originating commonly damage during installation, such as kneading or even during service, as well as corrosion, may be established and progress even a line catastrophic failure. Failure with containment loss can releasing a large inventory of oil and gas into the environment.

The technique status describes a various of piping repair technologies, mostly indicating cut of damaged passage. creation of water evacuation chambers and application of clamps or joints on the damaged area.

BR9301685 document describes a method and system for submerged piping repair operation which comprises, after cutting operations of a piping passage in which needed undertake of repair, and elevation of pipeline stretches through a remotely operated vehicle, in providing the end of one pipe stretches of a male connector and the other end of the other pipe stretches of a support and guide structure containing within it guide rollers, duckbill female connector and locking system .

BR1020130245321 document describes a method for repairing defects in rigid pipelines by applying double-gutter, joined by intermittent splints and applied with interference on the damaged region.

BR102014002292-9 document describes a method of repairing the oil industry's flexible collection and production lines quickly and without interrupting the flow of pipeline production and permanent "bird cage" failure repairs.

US2006272724 document describes a system and method of repairing a pipe, including a reinforcement material, such as a fiber structure (e.g., carbon fibers), to the pipe surface. An external sleeve is installed around the reinforcement material. A polymeric material is placed into the sleeve external around the reinforcement material. External pressure is applied to the sleeve. The polymeric material substantially saturates the reinforcing and curing material to form a reinforced polymeric composite that can increase or restore the pressure capacity or operating pressure level of the pipe.

The anteriority, despite its technical relevance, has some disadvantages when damaged lines have uneven curvature and surface, characteristics that are critical for clamp repairs.

More recently, the technique status describes the application of coiled filaments applied on the external surface of a piping.

US2002186938 document describes the winding of a resin impregnated fiber on a pipe.

PI0104774 document relates to a method and one equipment for deposition of fibers layers multiple of impregnated in the resin on the deteriorated region of a pipeline through a car that longitudinally slides along the pipe.

US5996216 document describes filament applying equipment for controlling and manipulating of the filaments, particularly under high speed conditions.

BR0706196 document describes a method of wire applying on the surface of a pipeline which may receive the application of synthetic resin.

BR9000565U document describes a machine for piping repair application through reinforcements produced by wires winding or monofilament multifilament cables around the pipe in the defect region, causing compressive stress in the pipeline wall. The machine presents a car that moves in sync with the turning of the machine, depositing the repair in the pipeline surface.

US6336983 document describes a method of applying tensile high-strength filament reinforcing bands to a cured resin matrix under the form of a coil with a plurality of elastic loops to reinforce a weakened pipe.

Therefore, the object of the invention is a pipeline repair equipment according to the technical features of claim 1. Advantageous embodiments of the invention form the subject matter of the dependent claims. This equipment for the pipeline repair is using the continuous filament technique, conventionally used in the repair of rigid land lines, not requiring of production runoff stoppage, coupled with the known properties of the continuous filament technique, namely providing a certain level of tightness, reducing or totally close the flow of fluid to the external environment, recompositing of the radial rigidity required for reduce the effects of internal pressure, smooth transition of radial rigidity between the repaired part and the vicinity sections, possibility to be applied to large lengths in a short time and with lower operating expenses, with tolerance to the existence of pipeline curvature during repair application and the possibility of the repair being removed or replaced without leaving damage or wastes that can harm the installation of other repair alternatives. In addition, the equipment object of the invention may be operated remotely, affording constant monitoring of wire tension and understanding of the effects of loads exerted on the pipeline cross section, avoiding incorrect or mistaken that shall make the ineffective repairs or produce line collapse, especially in the case of without internal pressure line during the operation or with very high thickness loss.

### BRIEF DESCRIPTION OF THE FIGURES

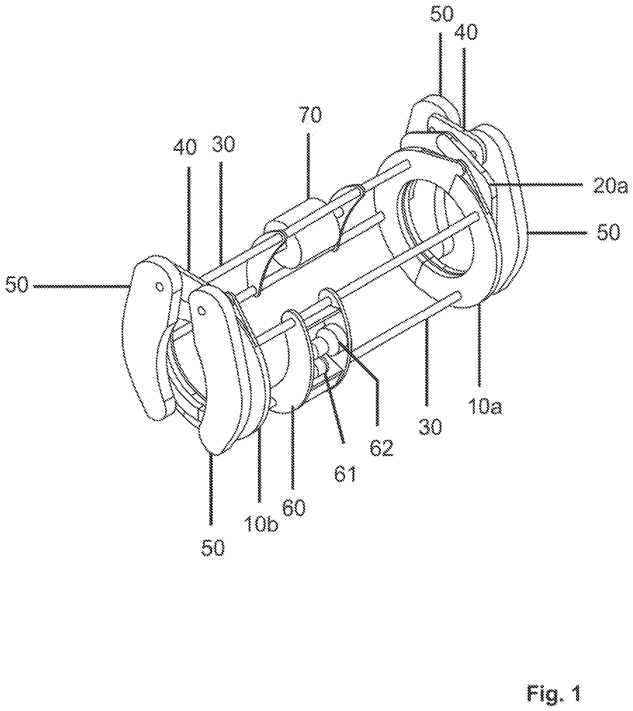

Figure 1 presents the perspective view of the pipeline repair equipment according to the invention.
Figure 2 presents the pipeline repair equipment with the (10a) and (10b) end ring structures, and the open (50) claws in order to maintain the open cage to involve the pipeline external surface to be repaired.
Figure 3 presents the mooring of the equipment, with the (50) claws closing in the pipeline surface.

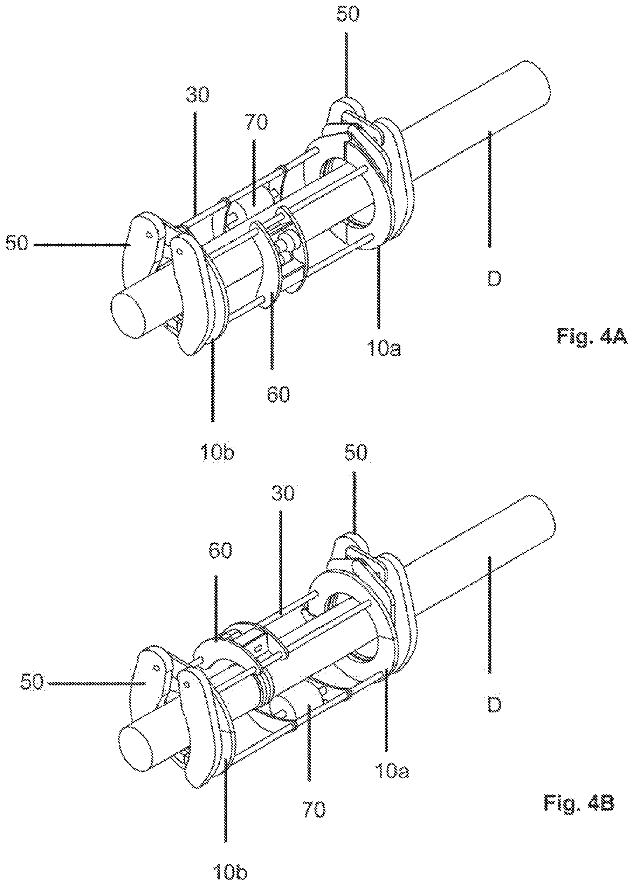

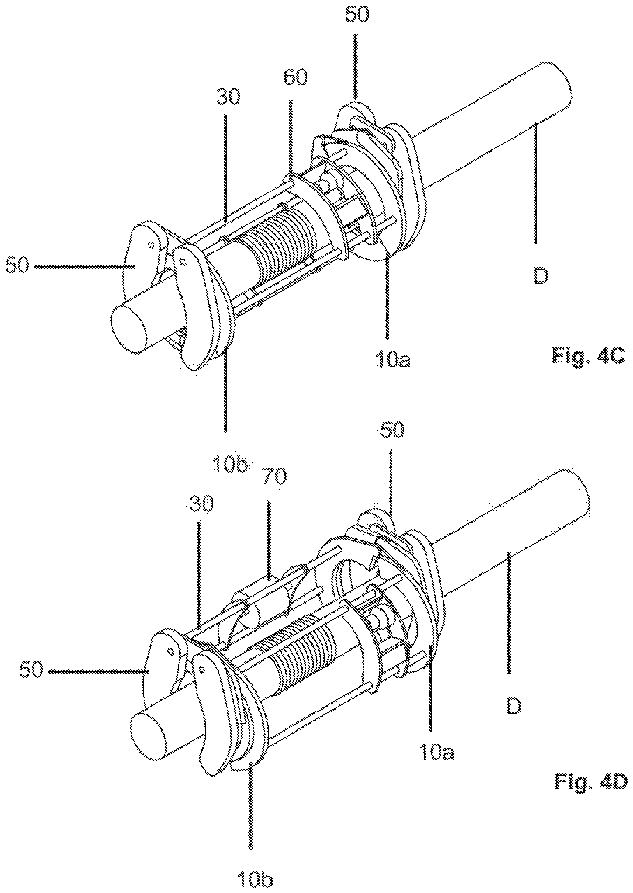

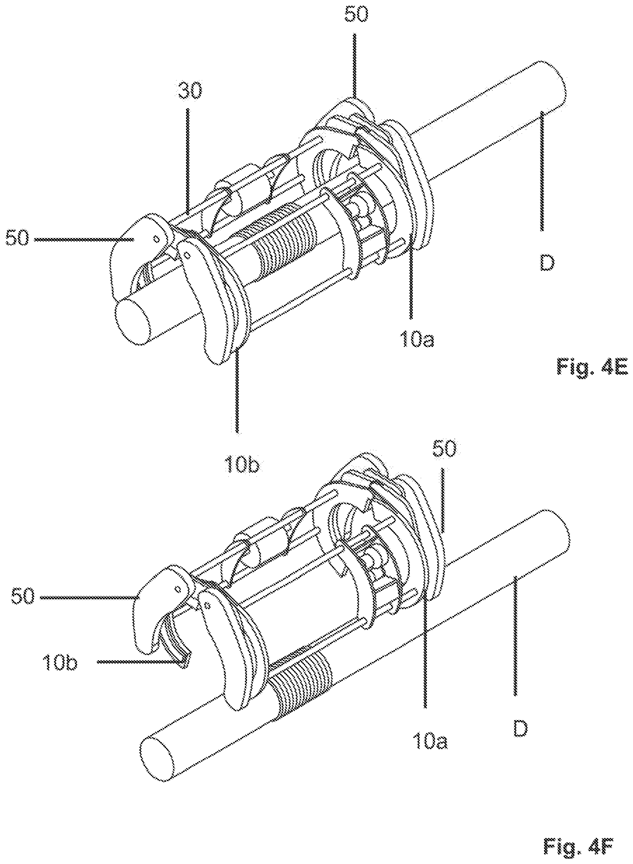

Figure 4A presents the pipeline-coupled pipeline repair equipment, Figure 4B presents the moving part of the rotating equipment, Figure 4C presents the repair material winding in the pipeline surface, Figure 4D presents the end of a cycle of rotation of the equipment moving part, Figure 4E presents the (10a) and (10b) opening of the end ring structures and the (50) claws and Figure 4F presents the equipment removal of the around the pipeline surface.

### DETAILED DESCRIPTION OF THE INVENTION

For the purposes of the invention, the term (M) "repair material" understand any filament or tape material, whether or not mixed with resin, to be applied to the perimeter of the (D) pipeline damaged area.

The pipeline repair equipment object of the invention understands a first pair of arcuate segments (10a) joined together by a connector disposed in the upper portion (20a), and a second pair of arcuate segments (10b) joined together by a connector in the upper portion (20b) said pairs of arcuate segments (10a) and (10b) forming a lower opening ring structure, in the context of the instant invention, for simplicity,

Entitled first ring structure (10a) and second ring structure (10b).

The first ring structure (10a) is parallel positioned and distanced from the second ring structure (10b), on both sides are attached the ends of rods (30) aligned with the generator, shaped a cage.

The (10a) and (10b) ring structure and the (30) rod-shaped cage configure the pipeline repair equipment movable part triggered by control unit for rotation.

In the (20a) and (20b) external surface of the connectors (40) an articulated bearing joins a pair of arcuate segments forming (50) a lower opening hinged claw positioned in the (10a) and (10b) external surface of the ring structures, (50) said claws fixed in relation to the equipment moving part.

The (10a) and (10b) opening of the ring structures is aligned with the (50) claws articulated opening, being the (10a) and (10b) opening and closing ring structures operations and the (50) claws are performed by a control unit.

At least (30) one of the rods has at least presents one (60) moving car longitudinally moving between the (10a) first ring structure and the (10b) second ring structure, said (60) moving car which pulls the (M) repair material disposed on at least (70) one coil fixed to a rod diametrically opposed to that of the (60) moving car.

A hydraulic or electric supply control unit, locally or remotely operated, triggers the electrical and hydraulic components that promote the rotation of the equipment moving part, as well as the opening and closing of the (10a) and (10b) end ring structures and the (50) claws and the moving car trigger.

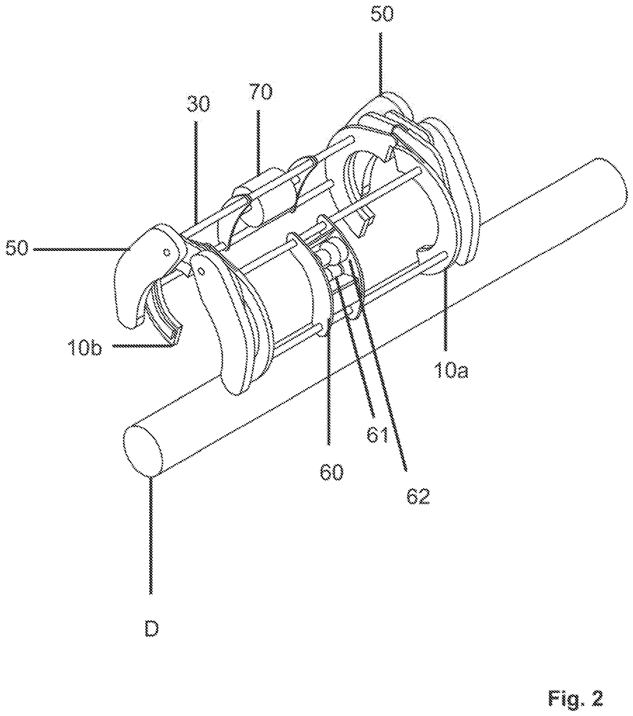

For line equipment positioning to be recovered, the (10a) and (10b) end ring structures and the (50) claws are opened so as to keep the cage in order to maintain the open cage to involve the pipeline external surface (D) to be repaired as presents in figure 2.

Optionally, the opening and closing control of the (10a) and (10b) extreme ring structures and the (50) claws is performed remotely, using a derrick or similar for cage positioning in the pipeline around.

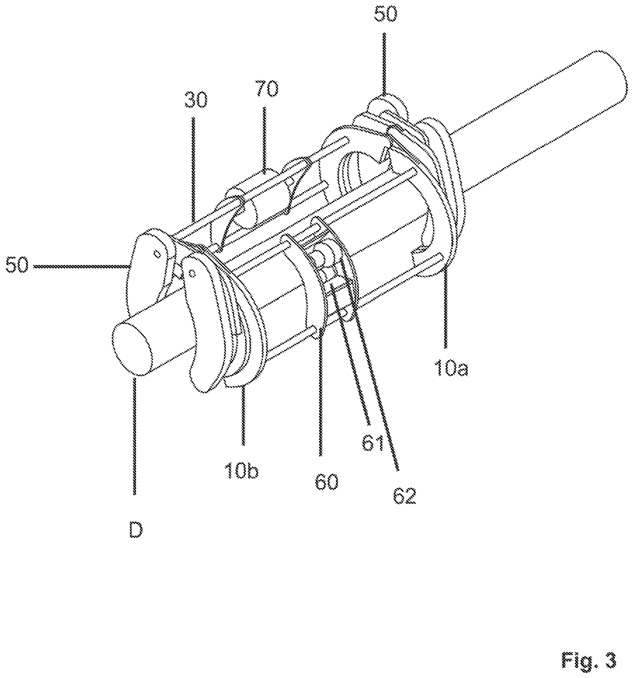

For pipeline repair equipment mooring into pipeline, the (50) claws are closed against the line perimeter. Then, (10a) and (10b) the ring structures are closed providing the cage closure by the line perimeter as presented in Figure 3.

The (10a) and (10b) end ring structures closure and the (50) claws is identified by the control unit, the concentric cage is rotated to the pipeline surface in the repair.

The end of the repair material disposed in the (70) coil is fixed to the (60) moving car and pulled by the (61) pulley, said (60) moving car which moves between the (30) rods ends synchronously with the rotating the equipment moving part, depositing the (M) tensioned repair material on the pipeline surface under the helicoid form.

The helical step is defined by the relationship between the equipment moving part rotation and the (60) moving car advance in the (30) rod, where each repair material layer is applied in the pipeline surface.
is equivalent to one (60) moving car displacement cycle between (10a) and (10b) ring structures.

Optionally, in the (30) rods ends is provided a limit switch mechanism (not presented) which reverse the advance direction of the (60) moving car in the (30) rod, affording the deposit of several layers (M) repair material.

The (60) moving car has (61) pulleys that allow tension adjustment of the repair material, operation preferably performed manually and whenever the cage is not rotating, and a (62) remote-triggered brake mechanism that immobilizes the (60) moving car in the (30) rod.

## Claims

1. PIPELINE REPAIR EQUIPMENT comprising a first ring structure (10a) in the form of a pair of arcuate segments joined together by a connector (20a) disposed in an upper portion, and a second ring structure (10b) in the form of a pair of arcuate segments joined together by a connector in an upper portion , said pairs of arcuate segments (10a, 10b) each forming a lower opening ring structure, said first ring structure (10a) positioned parallel and distanced from the second ring structure (10b), whose internal surfaces are attached to ends (30) of rods aligned with a generator, forming a cage, where the ring structures (10a, 10b) and the cage formed by the rods (30) configure a movable part, wherein the movable part is electrically or hydraulically triggerable, locally or remotely, for rotation, wherein an external surface of the connectors each have an articulated bearing (40) joining another pair of arcuate segments forming an articulated claw with a lower opening (50), wherein the articulated claws are positioned adjacent respective external surfaces of the ring structures (10a, 10b), said articulated claws (50) fixed relative to the movable part, with the lower opening of the ring structures (10a, 10b) aligned with the lower opening of the articulated claws (50), wherein the pipeline repair equipment further comprises :
a) a movable car (60) that is longitudinally movable on the rods (30) between the first ring structure (10a) and the second ring structure (10b), triggerable by a control unit, said movable car (60) having a pulley (61) for tensioning of repair material (M) disposed in at least one coil (70), and a remote-triggerable brake mechanism (62) that immobilizes the movable car (60) on the (30) rods;
**b)** the at least one coil attached (70) to a rod (30) diametrically opposite to that of the movable car (60) where the repair material (M) is stored, with the end of the repair material (M) attached in the movable car (60) and pulled by the pulley (61) for depositing the repair material (M) tensioned on a pipeline surface in a helicoid form.

2. PIPELINE REPAIR EQUIPMENT according to claim 1, **characterized in that** a helicoid step of the helicoid form is defined by a ratio between the rotation of the movable part and the advance of the movable car (60) on the rods (30), where each layer of repair material applied to the pipeline surface is equivalent to a displacement cycle of the movable car (60) between the ring structures (10a, 10b).

3. PIPELINE REPAIR EQUIPMENT according to claim 1, **characterized in that** the ends of the rods (30) have a limit switch mechanism which reverses an advance direction of the movable car (60).

## Patentansprüche

1. AUSRÜSTUNG ZUR REPARATUR VON ROHRLEITUNGEN, die eine erste Ringstruktur (10a) in Form eines Paares von bogenförmigen Segmenten, die durch ein in einem oberen Abschnitt angeordnetes Verbindungsstück (20a) miteinander verbunden sind, und eine zweite Ringstruktur (10b) in Form eines Paares von bogenförmigen Segmenten, die durch ein Verbindungsstück in einem oberen Abschnitt miteinander verbunden sind, aufweist, wobei die Paare von bogenförmigen Segmenten (10a, 10b) jeweils eine sich nach unten öffnende Ringstruktur bilden, wobei die erste Ringstruktur (10a) parallel und beabstandet von der zweiten Ringstruktur (10b) angeordnet ist, deren Innenflächen an Enden (30) von mit einem Generator ausgerichteten Stangen befestigt sind, wodurch ein Käfig gebildet ist, wobei die Ringstrukturen (10a, 10b) und der durch die Stange (30) gebildete Käfig ein bewegliches Teil einrichten, wobei der bewegliche Teil elektrisch oder hydraulisch, lokal oder ferngesteuert, zur Drehung auslösbar ist, wobei eine Außenfläche der Verbindungsstücke jeweils ein gelenkiges Lager (40) aufweist, das ein anderes Paar von bogenförmigen Segmenten verbindet, die eine gelenkige Klaue mit einer unteren Öffnung (50) bilden, wobei die gelenkigen Klauen angrenzend an die jeweiligen Außenflächen der Ringstrukturen (10a, 10b) positioniert sind, wobei die gelenkigen Klauen (50) relativ zu dem beweglichen Teil fixiert sind, wobei die untere Öffnung der Ringstrukturen (10a, 10b) mit der unteren Öffnung der gelenkigen Klauen (50) ausgerichtet ist, wobei die Ausrüstung zur Reparatur von Rohrleitungen ferner aufweist:
a) einen beweglichen Wagen (60), der auf den Stangen (30) zwischen der ersten Ringstruktur (10a) und der zweiten Ringstruktur (10b) in Längsrichtung beweglich ist, auslösbar durch eine Steuereinheit, wobei der bewegliche Wagen (60) eine Rolle (61) zum Spannen von Reparaturmaterial (M), das in mindestens einer Spule (70) angeordnet ist, und einen fernauslösbaren Bremsmechanismus (62) aufweist, der den beweglichen Wagen (60) auf den Stangen (30) festsetzt;
b) die mindestens eine Spule (70), die an einer Stange (30) befestigt ist, die derjenigen des beweglichen Wagens (60), in dem das Reparaturmaterial (M) gelagert ist, diametral gegenüberliegt, wobei das Ende des Reparaturmaterials (M) in dem beweglichen Wagen (60) befestigt ist und von der Rolle (61) gezogen wird, um das Reparaturmaterial (M) in einer Spiralform gespannt auf eine Oberfläche der Rohrleitung abzulegen.

2. AUSRÜSTUNG ZUR REPARATUR VON ROHRLEITUNGEN nach Anspruch 1, **dadurch gekennzeichnet, dass** eine spiralförmige Stufe der Spiralform durch ein Verhältnis zwischen der Drehung des beweglichen Teils und dem Vorschub des beweglichen Wagens (60) auf den Stangen (30) gebildet ist, wobei jede auf die Oberfläche der Rohrleitung aufgebrachte Schicht von Reparaturmaterial einem Verschiebungszyklus des beweglichen Wagens (60) zwischen den Ringstrukturen (10a, 10b) entspricht.

3. AUSRÜSTUNG ZUR REPARATUR VON ROHRLEITUNGEN nach Anspruch 1, **dadurch gekennzeichnet, dass** die Enden der Stangen (30) einen Begrenzungsschaltermechanismus aufweisen, der eine Vorschubrichtung des beweglichen Wagens (60) umkehrt.

## Revendications

1. ÉQUIPEMENT DE REPARATION DE CONDUITE comprenant une première structure annulaire (10a) sous la forme d'une paire de segments arqués joints ensemble par un raccord (20a) disposé dans une portion supérieure, et une seconde structure annulaire (10b) sous la forme d'une paire de segments arqués joints ensemble par un raccord dans une portion supérieure, lesdites paires de segments arqués (10a, 10b) formant chacune une structure annulaire à ouverture inférieure, ladite première structure annulaire (10a) étant positionnée parallèlement et à distance de la seconde structure annulaire (10b), dont les surfaces internes sont fixées à des extrémités (30) de tiges alignées avec un générateur, formant une cage, où les structures annulaires (10a, 10b) et la cage formée par les tiges (30) configurent une partie mobile, dans lequel la partie mobile est déclenchable électriquement ou hydrauliquement, localement ou à distance, pour une rotation, dans lequel une surface externe des raccords a chacune un palier articulé (40) rejoignant une autre paire de segments arqués formant une griffe articulée avec une ouverture inférieure (50), dans lequel les griffes articulées sont positionnées de manière adjacente aux surfaces externes respectives des structures annulaires (10a, 10b), lesdites griffes articulées (50) étant fixes par rapport à la partie mobile, l'ouverture inférieure des structures annulaires (10a, 10b) étant alignée avec l'ouverture inférieure des griffes articulées (50), dans lequel l'équipement de réparation de conduite comprend en outre
a) un chariot mobile (60) qui est mobile longitudinalement sur les tiges (30) entre la première structure annulaire (10a) et la seconde structure annulaire (10b), pouvant être déclenché par une unité de commande, ledit chariot mobile (60) ayant une poulie (61) pour tendre le matériau de réparation (M) disposé dans au moins une bobine (70), et un mécanisme de freinage pouvant être déclenché à distance (62) qui immobilise le chariot mobile (60) sur les tiges (30) ;
b) l'au moins une bobine (70) fixée à une tige (30) diamétralement opposée à celle du chariot mobile (60) où le matériau de réparation (M) est stocké, l'extrémité du matériau de réparation (M) étant fixée dans le chariot mobile (60) et tirée par la poulie (61) pour déposer le matériau de réparation (M) tendu sur une surface de conduite sous une forme hélicoïdale.

2. ÉQUIPEMENT DE REPARATION DE CONDUITE selon la revendication 1, **caractérisé en ce qu'**un pas hélicoïdal de la forme hélicoïdale est défini par un rapport entre la rotation de la partie mobile et l'avancée du chariot mobile (60) sur les tiges (30), où chaque couche de matériau de réparation appliquée à la surface de conduite est équivalente à un cycle de déplacement du chariot mobile (60) entre les structures annulaires (10a, 10b).

3. ÉQUIPEMENT DE REPARATION DE CONDUITE selon la revendication 1, **caractérisé en ce que** les extrémités des tiges (30) ont un mécanisme de commutateur de limite qui inverse une direction d'avancée du chariot mobile (60).
